Europäisches Patentamt

European Patent Office

Office européen des brevets

(19)

(11) **EP 0 752 805 A1**

(12) **EUROPEAN PATENT APPLICATION**

(43) Date of publication:
08.01.1997 Bulletin 1997/02

(51) Int. Cl.⁶: $H05B\ 41/00$, $H05B\ 41/29$, $H05B\ 39/04$, $H02H\ 5/04$

(21) Application number: 95830287.9

(22) Date of filing: 05.07.1995

(84) Designated Contracting States:
AT BE CH DE DK ES FR GB IT LI LU NL SE

(71) Applicant: MAGNETEK S.p.A.
I-53100 Siena (IT)

(72) Inventor: Canova, Antonio
I-52025 Montevarchi, Arezzo (IT)

(74) Representative: Mannucci, Gianfranco, Dott.-Ing.
et al
Ufficio Tecnico Ing. A. Mannucci
Via della Scala 4
50123 Firenze (IT)

(54) **Electronic converter with thermal protection circuit**

(57)     There is described an electronic converter for supplying a lamp (L) or the like, comprising a thermal protection circuit (51) with a heat-sensitive component (63; 64) which senses a working temperature and cuts off the converter when the said working temperature exceeds a pre-set upper threshold value. Characteristically, the heat-sensitive component (63; 64) is inserted into a heat-sensitive block (53) with which is associated a feedback and thermal hysteresis block (57), which maintains the converter in the cutoff condition until the said working temperature reaches a lower threshold value.

FIG.3

EP 0 752 805 A1

## Description

<u>Technical field</u>

The invention relates to an electronic converter for supplying a lamp or the like, comprising a thermal protection circuit with a heat-sensitive component which senses a working temperature and cuts off the converter when the said working temperature exceeds a pre-set upper threshold value.

Converters of this type are frequently used to supply halogen lamps (electronic transformers), fluorescent lamps (electronic ballasts) and the like.

<u>State of the art</u>

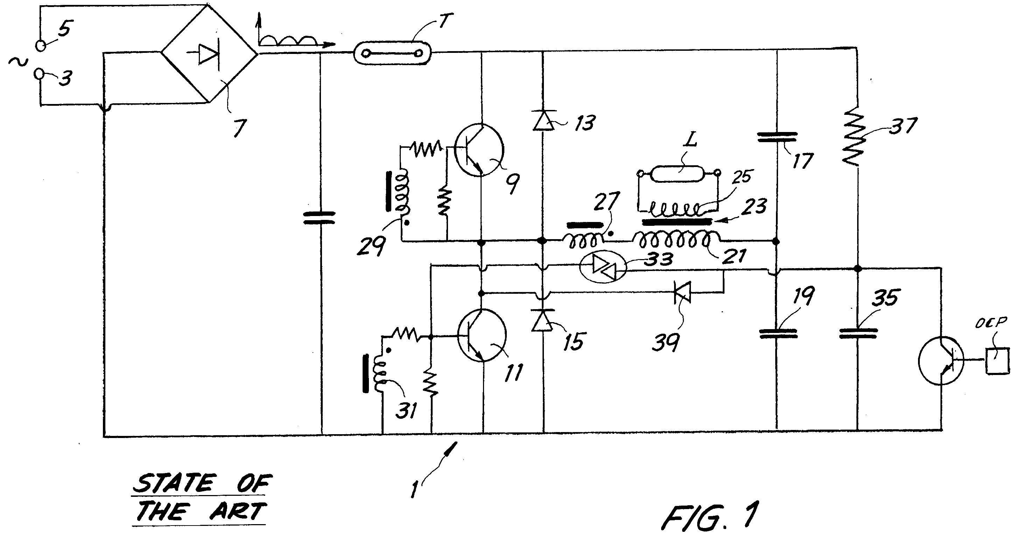

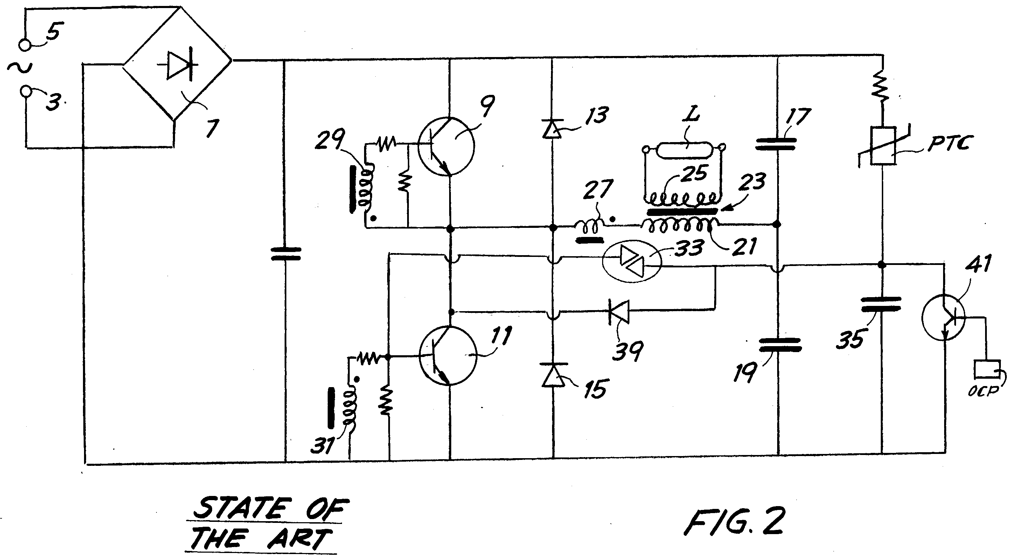

There currently exist substantially two types of thermal protection in electronic transformers. These two systems will be described below with reference to an electronic transformer whose operation can be summarized with reference to Figs. 1 and 2 in which the said two systems of thermal protection are represented.

Referring initially to Fig. 1, where 1 generally indicates the electronic transformer supplied with alternating voltage at the mains frequency and voltage (for example 50 Hz and 220 V) via the two terminals 3 and 5. The alternating voltage is rectified and transformed into pulsating current at a frequency of double the mains frequency by a rectifier bridge 7. This frequency of the supply voltage is converted to a frequency of the order of 20-60 kHz by a converter or inverter comprising two active power elements 9, 11, generally two BJTs or two MOSFETs, which in what follows will be indicated generally as transistors. Apart from the transistors 9, 11 the inverter comprises the respective diodes 13, 15 and two capacitors 17, 19 arranged in a half-bridge configuration.

The voltage obtained from the inverter is a high-frequency square-wave voltage modulated by a 100 Hz pulsation, which is applied to the primary winding 21 of a step-down transformer 23, whose secondary winding is indicated as 25. A 12 V voltage is available across the secondary winding 25 in order to supply the lamp, for example a halogen lamp L.

In series with the primary winding 21 of the step-down transformer 23 is arranged the primary winding 27 of a control transformer comprising two secondary windings 29, 31 connected to the base of the two transistors 9, 11 in order to delivery the control signals to the said two transistors 9, 11. With this arrangement, in a manner known per se, the transistors 9, 11 are alternately cut off and cut in, under the control of the transformer 27, 29, 31.

With each cycle of the rectified voltage delivered by the rectifier bridge 7, that is to say with each cycle of the 100 Hz pulsation, the self-oscillating inverter so far described should receive a firing pulse, as it is extinguished with each passage of the mains voltage through zero. The firing pulse is delivered by a circuit comprising a DIAC indicated by 33, a capacitor 35 and a resistor 37. The DIAC controls the base of the transistor 11. A diode 39 inhibits the DIAC after each cyclic firing of the inverter. At 41 is indicated a protection transistor which protects the inverter from the overcurrents inhibiting the firing of the DIAC 33 in the event of a short-circuit or overcurrent. The transistor 41 constitutes the active component of an overcurrent control circuit generally represented by the block indicated as OCP (Over Current Protection)

The thermal protection is obtained, according to the known solution illustrated in Fig. 1, with a thermal cutout T which, upon the reaching of a preset temperature datum, opens and interrupts the supply from the rectifier bridge 7.

The protection obtained with the thermal cutout is effective since the intervention of the cutout is fast and complete, that is it leads immediately to the complete extinguishing of the lamp L in the event of overheating. However, the use of the thermal cutout has notable disadvantages. In the first place, it is relatively expensive and has a notable influence on the overall cost of the circuit 1. Furthermore, there is a limited range of thermal cutouts on the market, and this limits the designer's choice to the few typical threshold values of the thermal cutouts available. The temperature hysteresis is, moreover, fixed and typical of the cutout and cannot be modified to suit the specific use. This means that it is not possible to choose the temperature at which the thermal cutout T will close anew after opening.

As an alternative to the use of the thermal cutout T the use has been suggested of a resistor with temperature-dependent variable resistance. Represented in Fig. 2 (where corresponding elements are indicated with the same reference numerals used in Fig. 1) is the same circuit as Fig. 1, where the thermal cutout T has been substituted by a resistor with temperature-variable resistance and positive thermal coefficient (PTC), i.e. whose resistance increases with the increase in temperature. The PTC resistor gradually inhibits the DIAC if the temperature exceeds a threshold value.

As compared with the use of the thermal cutout, the employing of a variable resistor has the advantage of lower cost, but has a few notable drawbacks including the fact that the cut-in threshold is not sharp, as the ohmic value varies slowly. Therefore in the event of excess temperature there is not a true and precise extinction, but rather a dimming of the transformer and a gradual reduction in the brightness of the lamp (and thus in the temperature) until an equilibrium situation is reached. Sometimes a flickering of the light occurs.

This drawback can be overcome using a PTC with a steeper characteristic. However, in this case notable difficulties arise, inasmuch as firstly it is necessary to employ a PTC with a sufficiently steep characteristic at the specific temperature at which the cutting-in of the PTC is required. This can be difficult or impossible on account of the limited range of values available on the market. Secondly it should be borne in mind that these components often exhibit a notable scatter in characteristic, i.e. components which are nominally identical, in reality exhibit discrepancies of a few percentage points in terms of cut-in characteristic. This results in notable differences in behaviour from one component to another. Moreover, the steeper the characteristic, the more the thermal hysteresis is reduced. The circuit fires again almost immediately after an often insufficient cooling, and the refiring is often preceded by a few flashes. A further drawback is represented by the cost, inasmuch as a PTC resistor with steep characteristic and with little scatter has a high cost almost equal to the cost of a thermal cutout.

Similar problems arise when using resistors with a negative thermal coefficient (NTC), i.e. whose resistance diminishes as the temperature increases.

Objects of the invention

The object of the present invention is that of providing a thermal protection circuit which is particularly suitable for use in self-oscillating inverters or converters, but can also be employed in other types of electronic devices, such as ballasts and non-self-oscillating inverters, which exhibits the characteristics of low cost, high reliability, fast cut-in, thermal hysteresis, and which, moreover, allows a free choice of cut-in threshold value without the typical limits imposed by the conventional components.

This and further objects and advantages, which will become clearly apparent to those skilled in the art from reading the following text, are obtained with a circuit having a heat-sensitive component inserted into a heat-sensitive block, with which is associated a feedback and thermal hysteresis block which maintains the converter in the cutoff condition until the working temperature reaches a predetermined lower threshold value. The circuit simulates, in practice, a switch whose turn-on and turn-off values can be adjusted.

Whereas in conventional circuits, cutoff and subsequent reactivation of the converter are assigned to a single heat-sensitive component, whose cut-in characteristic bindingly determines the cutoff and reactivation conditions, with the drawbacks noted above, according to the invention there is provision for the cutoff condition caused by the tripping of the heat-sensitive component to be maintained until the reaching of a freely selectable temperature, through the effect of the feedback control obtained by the feedback and hysteresis block which controls the heat-sensitive block.

Normally, as pointed out above, in converters there is an overcurrent protection means, typically a transistor. Advantageously, according to the invention provision is made for the heat-sensitive block to act by activating the said overcurrent protection means and thereby cutting off the converter.

In general, the converter can comprise an active component (for example the transistor of the overcurrent protection circuit) , the switching of which cuts off the converter. In this arrangement the heat-sensitive block delivers a control voltage to the said active component as a function of the working temperature when the latter reaches the upper threshold value for the cutting-in of the protection circuit. The control voltage causes the switching of the active component into the converter cutoff setting. The feedback and thermal hysteresis block speeds up cutoff and maintains the control voltage at the converter cutoff value until the temperature reaches the lower threshold value. Refiring is instantaneous.

In one possible configuration of the circuit according to the invention, the heat-sensitive block is connected to the input of the control voltage of the said active component and the said feedback and hysteresis block is connected to one of the poles of the said active component.

According to one possible embodiment of the feedback and thermal hysteresis block the said block comprises a hysteresis transistor which is kept on during the operation of the converter and which is cut off when the heat-sensitive block senses that the said temperature has reached the said upper threshold value. The hysteresis transistor turns on again when the said temperature has reached the said lower threshold value.

The heat-sensitive block has, in one possible embodiment, an input to which is applied a stabilized voltage, while the output voltage varies as a function of the value of the resistance of the said heat-sensitive component.

Advantageously, the heat-sensitive component is a temperature-variable resistor of the PTC or NTC type, i.e. with positive or negative temperature coefficient. Since cutoff is assigned to an active component such as for example the transistor of the overcurrent protection circuit, the characteristic of the heat-sensitive resistor can be linear and not very steep. This is particular advantageous in terms of the cost.

The thermal protection circuit which is the subject of the present invention is particularly indicated for use in self-oscillating converters with cyclic firing, in which the heat-sensitive block cuts off the cyclic firing circuit of the self-oscillating converter. However, as will appear clearly below, the same concepts can also be applied to converters of other types, for example in converters provided with a integrated control circuit with an enable/disable input, with which are associated the said heat-sensitive block and the said feedback and hysteresis block.

Brief description of the drawings

The invention will be better understood by following the description and the single drawing, which shows a non-limiting practical exemplary implementation of the invention. In the drawing:

Figs. 1 and 2 illustrate two self-oscillating inverters with thermal protection devices according to the known art, and already described;

Fig. 3 shows a self-oscillating inverter similar to the inverters of Figs. 1 and 2, with diagrammatic indication of the arrangement of the thermal protection circuit according to the invention;

Fig. 4 shows a first circuit embodiment of the thermal protection circuit according to the invention;

Fig. 5 shows a second circuit embodiment of the protection circuit according to the invention;

Figs. 6 and 7 show two different configurations in which the protection circuit according to the present invention is applied to a different type of inverter, which is non-self-oscillating.

<u>Detailed description of the preferred embodiments of the invention</u>

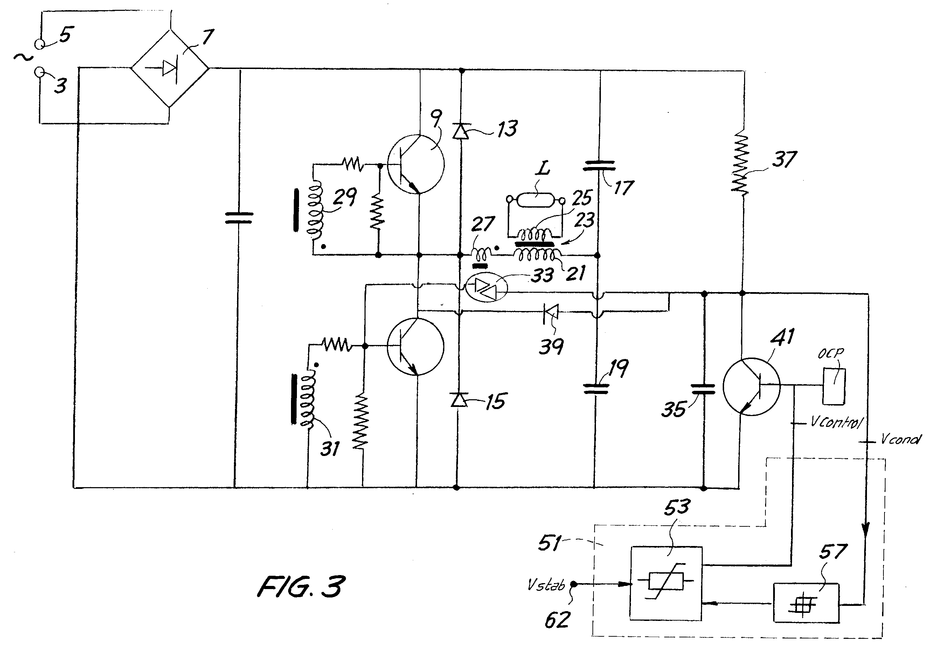

The circuit of Fig. 3 corresponds, as far as the converter is concerned, to the circuit of Figs. 1 and 2 and operates in a similar manner. Corresponding or equivalent elements are indicated with the same reference numerals in Figs. 1, 2 and 3.

The thermal protection circuit is indicated overall as 51. It is connected to the overcurrent protection transistor 41 and, as is made clear below, cuts off the DIAC 33 by acting on the transistor 41.

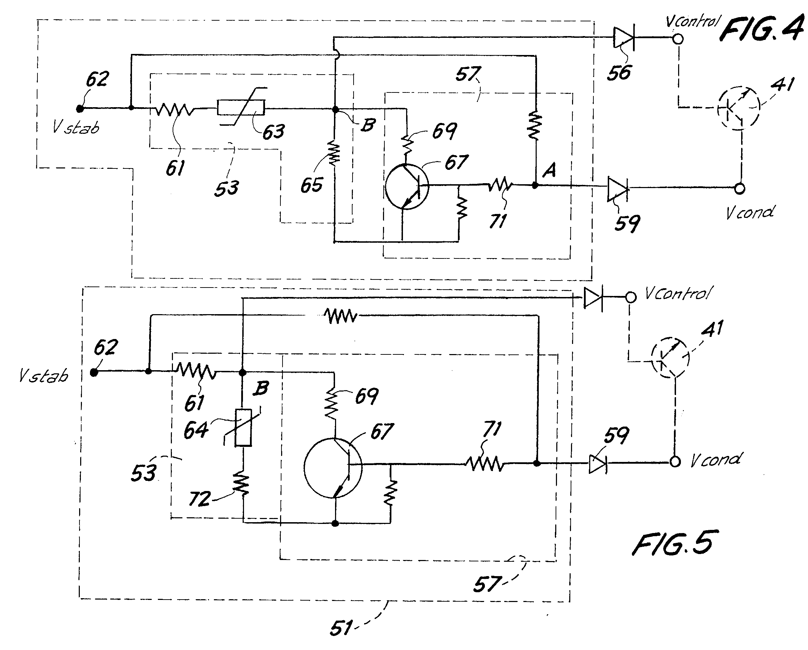

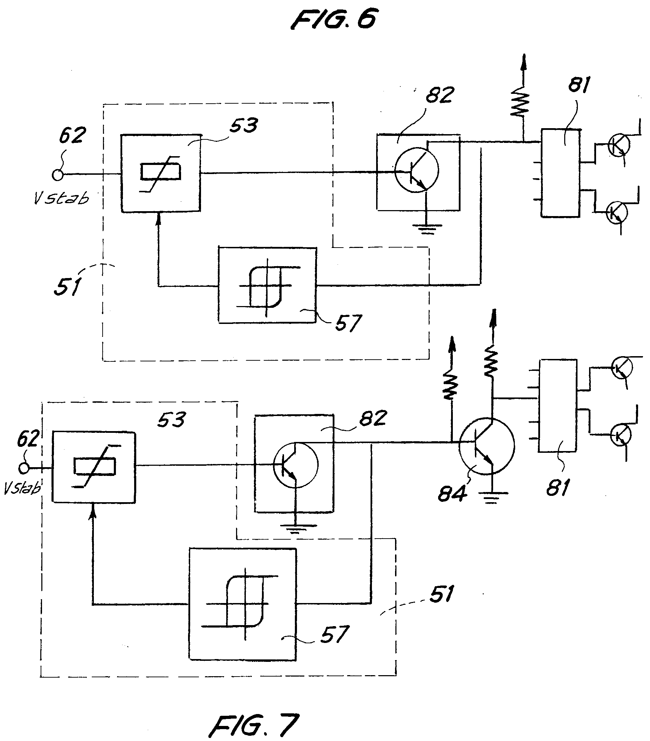

In general terms, the thermal protection circuit comprises a heat-sensitive block 53 connected to the base of the overcurrent protection transistor 41. In the manner which will be described later with reference to the specific exemplary circuit solutions of Figs. 4 and 5, the heat-sensitive block cuts off the transistor 41 when the temperature of the lamp exceeds a certain preset value. The thermal protection circuit 51 comprises, moreover, a feedback and thermal hysteresis block 57 connected to the collector of the transistor 41. The thermal hysteresis block 57 speeds up the cutting-in of the protection and renders it "sharp" so that, when the transistor 41 and thus the DIAC 33 have been cut off through the cutting-in of the heat-sensitive block 53, the cutoff condition persists until a presettable lower temperature threshold is reached.

Shown in Fig. 4 is a first circuit solution for producing the thermal protection circuit 51, based on the use of a temperature-variable resistor with negative coefficient (NTC), as the heat-sensitive component. More particularly the circuit solution of Fig. 4 provides a first resistor 61 one of whose poles is connected to a terminal 62 at which a stabilized voltage $V_{stab}$ is present. The resistor 61 is arranged in series with the NTC resistor indicated at 63, which is connected to a node B. The node B is connected across a resistor 65 to the emitter of a transistor 67 and across a resistor 69 to the collector of the same transistor 67. The node B is also connected to a diode 55 through which the node B is connected to the base of the transistor 41 (indicated in broken lines in Fig. 4). A diode 59 is, conversely, arranged between the collector of the transistor 41 and a node A, connected, across a resistor 71, to the base of the transistor 67. By means of the diodes 55 and 59 the thermal protection circuit 51 is uncoupled from the converter.

The circuit parameters are chosen in such a way that under normal operating conditions, i.e. with an operating temperature below the upper threshold value for the temperature, at which the heat-sensitive block 53 cuts in, the voltage $V_A$ at the node A is less than the voltage $V_{cond}$ downstream of the diode 59, so this diode 59 is off. The transistor 67 is on and hence the voltage $V_B$ of the node B is given by:

$$V_B = V_{stab} \frac{R_{65}//R_{69}}{R_{65}//R_{69} + R_{61} + R_{63}} \qquad (1)$$

where the letter R followed by a number represents the ohmic value of the respective resistor and where Rx//Ry indicates the total value of the two generic resistors Rx, Ry in parallel.

When an anomalous rise occurs in the temperature of the lamp L, the resistance of the NTC component decreases until the voltage $V_B$ at the node B is brought to a value such as to switch on the diode 55 and hence also the transistor 41 through the effect of the output voltage $V_{control}$ from the heat-sensitive block, which stalks the voltage $V_B$ (except for the voltage drop on the diode 55), applied to the base of the transistor 41. The voltage $V_{cond}$ decays until the diode 59 is turned on. Consequently the transistor 67 turns off insofar as the voltage at the point A falls and is no longer able to keep the transistor 67 on. The voltage at the node B now becomes

$$V_B = V_{stab} \frac{R_{65}}{R_{65} + R_{61} + R_{63}} \qquad (2)$$

which is a value greater than the previous one. The transistor 67 remains cut off until the temperature (and hence a value of the resistor $R_{63}$) has reached a lower threshold value which is freely settable during the design phase. The transistor 67 thus constitutes the essential element of the thermal hysteresis block 57.

In essence, therefore, the heat-sensitive block 53 consists of a resistive divider comprising the resistors 61, 63 and 65. The hysteresis block 57 cuts in to modify the value of the resistance of one branch of the resistive divider inserting the further resistor 69 in parallel with the resistor 65, thus modifying the voltage at the node B of the divider and allowing the converter to be kept in the cutoff condition.

The configuration of Fig. 5 differs from the configuration of Fig. 4 insofar as it employs a temperature-variable resistor with a positive temperature coefficient, i.e. a PTC resistor indicated as 64, arranged differently in the circuit, i.e. between the node B and the emitter of the transistor 67, together with a resistor 72 in series with the resistor 64. The circuit elements which are identical to or correspond with those of the configuration of Fig. 4 are indicated with the same reference numerals. The operation is similar. With symbols similar to those adopted with the configuration of Fig. 4, under normal operating conditions the voltage $V_B$ at the node B is equal to

$$V_B = V_{stab} \frac{(R_{72}+R_{64})//R_{69}}{R_{69}//(R_{64}+R_{72}) + R_{61}} \qquad (3)$$

The diode 59 is off and the transistor 67 is on. When the temperature sensed by the resistor 64 exceeds the threshold value, at which the voltage $V_B$ at the node B is such as to turn on the diode 55 and the transistor 41, the voltage on the collector of the transistor 41 decreases and tends to zero, the diode 59 turns on, the voltage at the point A decreases and the transistor 67 is cut off. The voltage $V_B$ increases relative to the value given by (3) and becomes:

$$V_B = V_{stab} \frac{R_{64}}{R_{64} + R_{61} + R_{72}} \qquad (4)$$

In the case of the configuration of Fig. 5 also, therefore, the heat-sensitive block has a resistive divider and the hysteresis block cuts in, inserting an extra resistor in parallel in one branch of the divider.

Shown diagrammatically in Fig. 6 is the use of the same circuit concept with an inverter controlled by an integrated circuit 81 with an enable/disable pin. In this arrangement a transistor 82, to which is connected the thermal protection circuit 51, is connected to the enable/disable pin of the integrated circuit. The thermal hysteresis block 57 is connected to the collector of the transistor 82. The operation is conceptually the same and the circuit solutions for the thermal protection circuit can be those of Figs. 4 or 5. The configuration of Fig. 7 is identical to the configuration of Fig. 6 except for the presence of a further transistor 84, interposed between the enable/disable pin of the integrated circuit 81 and the transistor 41. The configurations of Figs. 6 and 7 are employed alternately depending on the control logic of the integrated circuit 81: if the circuit 81 is disabled when a high signal is present on the enable/disable pin, the configuration of Fig. 7 is used; when the circuit 81 is disabled in the presence of a low signal on the enable/disable pin, the configuration of Fig. 6 is employed.

**Claims**

1. Electronic converter for supplying a lamp (L) or the like, comprising a thermal protection circuit (51) with a heat-sensitive component (63; 64) which senses a working temperature and cuts off the converter when the said working temperature exceeds a pre-set upper threshold value, characterized in that the said heat-sensitive component (63; 64) is inserted into a heat-sensitive block (53) with which is associated a feedback and thermal hysteresis block (57), which maintains the converter in the cutoff condition until the said working temperature reaches a lower threshold value.

2. Converter according to Claim 1, characterized in that it comprises a protection means (41) which cuts off the converter in the event of a short-circuit or overcurrent, the said heat-sensitive block (53) causing activation of the said overcurrent protection means (41) and thereby cutting off the converter.

3. Converter according to Claim 1 or 2, characterized in that it comprises an active component (41), the switching of which cuts off the converter; that the thermal protection circuit (51) delivers a control voltage ($V_{control}$) to the said active component as a function of the said temperature when the said upper threshold value is reached, the said control voltage causing the switching of the said active component (41) into the converter cutoff setting; and that the said feedback and thermal hysteresis block (57) maintains the control voltage ($V_{control}$) at the converter cutoff value until the said temperature reaches the said lower threshold value.

4. Converter according to Claim 3, characterized in that the said active component (41) is part of the overcurrent protection means of the said converter.

5. Converter according to Claims 3 or 4, characterized in that the said active component (41) is a transistor, to the base of which is applied the said control voltage ($V_{control}$).

6. Converter according to Claim 3, characterized in that the said heat-sensitive block (53) is connected to the input of the control voltage ($V_{control}$) of the said active component (41) and that the said feedback and hysteresis block (57) is connected to one of the poles of the said active component (41).

7. Converter according to one or more of the preceding claims, characterized in that the said heat-sensitive block (53) comprises a resistive divider (61, 63, 65; 61, 64, 72) comprising a temperature-variable resistor (63; 64) and that the said hysteresis block (57) alters the value of one of the branches of the said resistive divider.

8. Converter according to one or more of the preceding claims, characterized in that the said feedback and hysteresis block (57) comprises a hysteresis transistor (67) which is kept on during the operation of the converter and which is cut off when the heat-sensitive block senses that the said temperature has reached the said upper threshold value, the hystereis transistor (67) being turned on again when the said temperature has reached the said lower threshold value.

9. Converter according to one or more of the preceding claims, characterized in that the heat-sensitive block (53) has an input (62) to which is applied a stabilized voltage ($V_{stab}$) the output voltage ($V_{control}$) varying as a function of the value of the resistance of the said heat-sensitive component (63; 64).

10. Converter according to one or more of the preceding claims, characterized in that the said heat-sensitive component (63; 64) is a temperature-variable resistor with a positive or negative temperature coefficient.

11. Converter according to Claim 10, characterized in that the said heat-sensitive component (63; 64) has a substantially linear characteristic.

12. Converter according to one or more of the preceding claims, characterized in that the thermal protection circuit (51) is uncoupled from the circuit of the converter by means of respective diodes (55; 59).

13. Converter according to one or more of the preceding claims, characterized in that it is a self-oscillating converter with cyclic firing and that the said heat-sensitive block (53) cuts off the cyclic firing circuit (33-39) of the self-oscillating converter.

14. Converter according to one or more of Claims 1 to 12, characterized in that it comprises a integrated control circuit (81) with an enable/disable input, with which are associated the said heat-sensitive block (53) and the said feedback and hysteresis block (57).

15. Converter according to Claim 14, characterized in that the said enable/disable input is connected to a cutout means (82) to which is applied a control voltage ($V_{control}$) output by the said heat-sensitive block (53).

16. Converter according to Claim 15, characterized in that the said cutout means is a transistor (82) whose base is connected to the heat-sensitive block and whose collector is connected to the said enable/disable input and to the input of the feedback and hysteresis block (57).

STATE OF
THE ART

FIG. 1

EP 0 752 805 A1

FIG.2

STATE OF
THE ART

FIG. 3

EP 0 752 805 A1

*FIG.4*

*FIG.5*

EP 0 752 805 A1

## FIG. 6

## FIG. 7

EP 0 752 805 A1

**European Patent Office**

# EUROPEAN SEARCH REPORT

Application Number

EP 95 83 0287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 466 031 (ZUMTOBEL)<br><br>* column 7, line 21 - column 7, line 55; figure 1 *<br>--- | 1-5,10, 13 | H05B41/00<br>H05B41/29<br>H05B39/04<br>H02H5/04 |
| A | EP-A-0 176 708 (SIEMENS)<br>* column 3, line 59 - column 4, line 67; figure 2 *<br>----- | 1,7-11 | |
| | | | TECHNICAL FIELDS SEARCHED (Int.Cl.6)<br><br>H05B<br>H02H<br>H03K |

The present search report has been drawn up for all claims

| Place of search | Date of completion of the search | Examiner |
|---|---|---|
| THE HAGUE | 20 October 1995 | Speiser, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    & : member of the same patent family, corresponding
    document

EPO FORM 1503 03.82 (P04C01)

12